# EUROPEAN PATENT APPLICATION

(11) **EP 4 261 913 A1**
(43) Date of publication of application: **18.10.2023**
(21) Application number: 22168577.9
(22) Date of filing: 14.04.2022
(51) Int. Cl.: H01M 4/04, H01M 4/62, H01M 4/134, H01M 4/133, H01M 4/1393, H01M 4/1395, H01M 4/36, H01M 4/38, H01M 4/587, H01M 4/66, H01M 4/02

(54) **MULTILAYER ELECTRODE, A METHOD FOR MANUFACTURING AN ELECTRODE AND ELECTROCHEMICAL STORAGE DEVICE**

(71) Applicant: Cellforce Group GmbH, 72072 Tübingen (DE)
(72) Inventor: Sommer, Heino, 76344 Eggenstein-Leopoldshafen (DE)
(74) Representative: Michalski Hüttermann & Partner Patentanwälte mbB

(57) **Abstract**

The invention relates to an electrode for an electrochemical storage device, comprising: at least one current collector, a first silicon-carbon composite material, comprising a plurality of first particles, a second silicon-carbon composite material, comprising a plurality of second particles, wherein the first silicon-carbon composite material and the second silicon-carbon composite material are interconnected with the current collector, wherein the first silicon-carbon composite material is formed as a first coating layer of the current collector and the second silicon-carbon composite material is formed as second coating layer of the current collector.

## Description

The present disclosure relates to an electrode for an electrochemical storage device, comprising at least one current collector, a first silicon-carbon composite material, comprising a plurality of first particles, and a second silicon-carbon composite material, comprising a plurality of second particles. Furthermore, the disclosure relates to an electrochemical storage device and to methods for manufacturing an electrode.

Lithium-ion batteries are widely used and provide stored energy to different components. Especially in electric vehicles and in hybrid electric vehicles lithium-ion batteries are supplying the vehicle components and the drivetrain with electrical energy. In such use cases a long electric driving range is highly desirable and can be achieved by increasing the capacity of the battery. One downside of increasing the capacity of the battery is that the charging duration increases, too.

Furthermore, it is known that lithium-ion batteries do degrade over a period of time. Especially, with increasing number of charging and discharging cycles, the electrochemical cells of the battery are prone to capacity loss, in which a solid electrolyte intermediate phase (SEI layer) forms on the negative electrode based on a variety of different mechanisms, competing with reversible lithium intercalation. A SEI layer usually forms due to a reduction of organic solvents and anions on an electrode surface during charge and discharge cycles of an electrochemical cell. In such case, a large part of the formation already occurs during the first charge and discharge cycle of the electrochemical cell. In the prior art, it is known that the SEI layer plays an important role in terms of safety, performance and cycle life of electrochemical cells in lithium-ion batteries.

In WO2020/177624 A1 an electrode arrangement is disclosed with a negative electrode film comprising a first coating and a second coating. The first coating is the outermost layer of the negative electrode film and comprises a first negative electrode active material. The second coating is provided between the first coating and the negative electrode current collector, and comprises a second negative electrode active material. Both, the first and second negative electrode active material comprise a silicon-based material and a carbon material with different percentages by mass of the silicon-based material.

An objective of the present disclosure is to provide an electrode and an electrochemical storage device with improved charging capability. A further object of the present disclosure is to provide methods for cost efficient manufacturing of electrodes for an electrochemical storage device. This object is achieved by the subject-matter of the independent claims. Further developments of the subject-matter of the independent claims are provided in the sub-claims.

According to one aspect of the present disclosure an electrode for an electrochemical storage device is disclosed. In an advantageous embodiment the electrode may be formed as an anode of an electrochemical storage device.

The electrode comprises at least one current collector, a first silicon-carbon composite material and a second silicon-carbon composite material. The first silicon-carbon composite material comprises a plurality of first particles. The second silicon-carbon composite material comprises a plurality of second particles. The first silicon-carbon composite material and the second silicon-carbon composite material are interconnected with the current collector.

Preferably, the first silicon-carbon composite material is formed as a first coating layer of the current collector and the second silicon-carbon composite material is formed as second coating layer of the current collector.

According to an embodiment of the present invention a particle size of the first particles is bigger than a particle size of the second particles. By providing a bigger first particles in the first layer and smaller particles in the second layer, the reactive surface is higher in the second layer compared to the first layer. Thus, the second layer which is in direct contact with the electrolyte can incorporate a higher amount of lithium ions during a shorter time period. Thus, the fast charge capability of an electrochemical storage device comprising the inventive electrode is improved, especially due to faster kinetics within the second layer. The faster kinetics of ions within the second layer results from higher surface area and from higher tortuosity (e.g. from more pores).

Typically, the silicon in a porous carbon scaffold with micropores and mesopores is introduced into the pores of the porous carbon scaffold by means of a chemical vapor infiltration (CVI) reaction of silicon-containing gas such as monosilane, e.g., silicon hydrogen (SiH₄). Descriptions of such processes are described in US Publication No. 2017 / 0170477, the full disclosure of which is hereby incorporated by reference in its entirety for all purposes.

The present disclosure offers a further advantage that the distribution of the first silicon-carbon composite material enables a higher packing density and improves the electrical conductivity between the second layer and the current collector. Furthermore, the first layer enables an increased capacity with slower kinetics within the first layer.

Based on an alternative embodiment, a particle size of the second particles is bigger than a particle size of the first particles. By providing a second layer with bigger particles the kinetics of the lithium ions may be reduced due to a smaller surface area of the second particles within the second layer. The reduction of the kinetics of the lithium ions results in less thermal stress of the electrochemical storage device or appropriate electrochemical cell with the inventive electrode. Thus, the cycle stability and the durability of the electrochemical storage device may be improved by providing a second layer with second particles which are bigger than the first particles.

In a further embodiment, the plurality of first particles is formed as a porous carbon scaffold with micropores and mesopores, wherein silicon is incorporated in the micropores and mesopores of the carbon scaffold. The carbon scaffold is formed in the first layer comprising micropores and mesopores. Additionally or alternatively, the carbon scaffold may comprise macropores. Thus, the energy density within the first layer may be increased.

Furthermore, according to a further embodiment, the plurality of second particles is formed as a porous carbon scaffold with micropores and mesopores, wherein silicon is incorporated in the micropores and mesopores of the carbon scaffold. The carbon scaffold is formed in the second layer comprising micropores and mesopores. Additionally or alternatively, the carbon scaffold may comprise macropores. Thus, the energy density within the second layer may be increased.

In accordance with a further embodiment, the plurality of first particles is formed as graphite with a surface, wherein silicon is deposited as Si particle or Si wires on the surface of the graphite.

In a further embodiment, the plurality of second particles is formed as graphite with a surface, wherein silicon is deposited as Si particle or Si wire on the surface of the graphite.

According to an embodiment of the electrode, the second silicon-carbon composite material is interconnected with the current collector via the first silicon-carbon composite material. Thus, by providing the first silicon-carbon composite the thickness of the second silicon-carbon composite may be reduced without sacrificing the overall capacity potential of the electrode. Especially, the first silicon-carbon composite may be formed as a cheap material and the second silicon-carbon composite as an advanced and more expensive material. Thus, by utilizing the first layer, the amount of expensive materials is reduced and the electrode can be manufactured more cost efficient.

The surface of the first particles, especially the BET surface, may be reduced compared to the second particles, if the plurality of first particles of the first silicon-carbon composite material comprises a particle size distribution with Dv50 of > 8 µm. Accordingly, the surface of the second particles, especially the BET surface, may be increased, if the plurality of second particles of the second silicon-carbon composite material comprises a particle size distribution with Dv50 of < 6 µm. Thus, the specific surface of the first layer and the second layer for the physical adsorption of lithium ions based on the Brunauer-Emmett-Teller (BET) theory is adjusted in order to maximize fast charging of the resulting electrode.

The overall particle distribution in each of the first layer and/or the second layer may be of a multimodal or a monomodal form. For example, the second layer may be formed with a material of a multimodal form in order to increase the density and the tortuosity.

The particle size distribution can be measured as known in the art. For example, the particle size distribution can be measured by laser light scattering of the particles in suspension, or a powder time-of-flight methodology, or other methods known in the art. The particle size distribution can be expressed as the number particle distribution or volume particle distribution, as known in the art. Accordingly, the particle size distribution can be expressed as Dvx, where D represents particle diameter, v represents the value corresponding to volume basis, and x represents the cumulative percentage of particles. For example, Dv1, Dv10, Dv50, Dv90, and Dv99 are the diameter at which 1%, 10%, 50%, 90%, and 99% of the plurality of particles in the given volume distribution reside below the named micron size. The particle size distribution is bounded by the D0 (smallest particle in the distribution) and Dv100 (maximum size of the largest particle); the Dv50 is the volume average particle size. The particle size distribution can be described in terms of one of more modes present in the particle size distribution, where the concept of mode is known in the art, for example is a maxima in the distribution. Particle size distributions can be monomodal or multimodal such as bimodal or trimodal. Modes within multimodal particle size distributions can comprise distinct local maxima within the particle distribution and/or shoulders that can be resolved from the first and/or second derivative(s) of the particle size distribution.

In accordance with an embodiment of the present disclosure, the particle size and/or particle size distribution may be obtained based on measurements of an electron microscope, e.g. a scanning electron microscope (SEM) or a scanning tunneling microscope (STM). After manufacturing the electrode with the first layer and the second layer, a cross section though both layers and the current collector of the electrode can be measured in order to obtain the particle sizes, the sizes of pores and the distribution of the particle sizes. Thus, a median or an average particle size can be measured precisely in order to classify and/or check the quality of the electrode.

Based on a further embodiment, the first silicon-carbon composite material comprises a first BET surface which is smaller than a second BET surface of the second silicon-carbon composite material. Thus, due to the increased BET surface the kinetics of the lithium ions in the second layer of the electrode are accelerated compared to the kinetics of the lithium ions within the first layer.

The particle size distribution and the density of the materials of the first layer and the second layer may be further controlled, if the first silicon-carbon composite material comprises a Si/C content between 0% and 70%, including 0% and 70%. In a further embodiment, the second silicon-carbon composite material comprises a Si/C content between 50% and 100%, including 50% and 100%. Thus, the Si/C content of the appropriate layer materials offers an additional adjustment possibility.

In accordance with a further embodiment, the first layer comprises graphite particles and/or carbon black particles and/or carbon nanotubes besides the first silicon-carbon composite material. Moreover, the second layer comprises graphite particles and/or carbon black particles besides the second silicon-carbon composite material. For example, the amount of graphite particles and/or carbon black particles by volume may be set to 30%. The appropriate graphite particles may comprise an average size of several µm. The carbon black particles may comprise an average size of 30 - 100 nm. Especially the carbon black particles may increase the electrical conductivity within the layers of the electrode. By inserting carbon nanotubes the electrical connection between the first layer and the current collector is improved. This results in a reduced electrical resistance of the electrode in the transition area between the first layer and the current collector.

The current collector may be formed technically easy if it is formed as a metal foil or as a metal alloy foil. Preferably, the current collector may be formed from copper or may comprise copper e.g. in a copper-alloy.

According to a further aspect of the invention a method for manufacturing an electrode is provided. In a first step a first silicon-carbon composite mixture combined with a binder solution and comprising graphite particles and/or carbon black particles and/or carbon nanotubes is provided. Furthermore, a second silicon-carbon composite mixture combined with a binder solution and comprising graphite particles and/or carbon black particles is provided. Then the first silicon-carbon composite mixture combined with a binder solution is applied as a first layer to at least one current collector which is formed as an electrically conductive foil. In a further step the second silicon-carbon composite mixture combined with a binder solution is applied as a second layer on top of the first layer. After performing a drying process with temperatures of 100°C to 140°C the electrode is formed.

Thus, the first layer is applied as a mixture paste to the current collector and the second layer is also applied as a mixture paste on top of the first layer. Based on an advantageous embodiment, the first silicon-carbon composite mixture combined with a binder solution and/or the second silicon-carbon composite mixture combined with a binder solution are applied by curtain coating to the current collector. The additional graphite particles and/or carbon black particles and/or carbon nanotubes can also be mixed to the mixtures and applied via the curtain coating. By performing curtain coating to the current collector a constant layer thickness can be maintained. Furthermore, the manufacturing costs of the electrode and the electrochemical storage device can be reduced.

The electrode may be formed as an anode electrode which is utilized as a positive electrode in the electrochemical storage device. An electrochemical storage device is provided according to a further aspect of the invention and may be formed as a lithium-ion battery. Depending on the requirements, the electrochemical storage device may be formed as a battery cell, a battery unit, a battery module or a battery system.

The electrochemical storage device comprises at least one electrode, which is formed as a cathode electrode. Furthermore, the electrochemical storage device comprises at least one inventive electrode, which is formed as an anode electrode and at least one separator arranged between the anode electrode and the cathode electrode. An electrolyte provides a supply of lithium ions between the electrodes. Additionally a further separator between the electrodes may be provided in order to prevent short circuit of the electrodes.

In accordance with an embodiment of the present invention, a first silicon-carbon composite mixture is disclosed. The first silicon-carbon composite mixture comprises a first silicon-carbon composite material with a porous carbon scaffold comprising micropores and mesopores and a total pore volume no less than 0.5 cm³/g. The first silicon-carbon composite material preferably has a silicon content from 30% to 70% and a plurality of particles comprising a Dv50 of 6 µm to 20 µm.

A further embodiment of the present invention provides a second silicon-carbon composite mixture with at least one second silicon-carbon composite material. The at least one second silicon-carbon composite material comprises at least one further carbon scaffold with micropores and mesopores and a total pore volume with no less than 0.5 cm³/g. Preferably the second silicon-carbon composite material has a silicon content from 30% to 70% and a plurality of particles comprising a Dv50 of 1 µm to 6 µm.

The binder is a binding agent or binding material. A binder thus refers to a material that can hold together individual components, in particular particles, of a substance, for example a carbon. A binder is typically arranged such that when particles are brought together with a corresponding binder, a cohesive mass is formed which can be further shaped into a new form. In one further embodiment, the silicon-carbon composite mixture comprises at least one further binder. This results in the advantage that carbon increases the conductivity of the electrode and thus provides improved conductivity. The at least one further binder further supports the mechanical stability. A further carbon may be a hard carbon material or a graphitic carbon or a metal oxide.

In accordance with a further aspect of the invention, an alternative method for manufacturing an electrode is provided. In a first step a first dry silicon-carbon composite mixture combined with a binder powder and comprising graphite particles and/or carbon black particles is provided. In a further step a second dry silicon-carbon composite mixture combined with a binder powder and comprising graphite particles and/or carbon black particles is provided. The first silicon-carbon composite mixture combined with a binder powder is applied via calendering as a first layer to at least one current collector which is formed as an electrically conductive foil and the second silicon-carbon composite mixture combined with the binder powder is applied via calendering as a second layer on top of the first layer.

Thus, the alternative method for manufacturing enables a dry or semi-dry manufacturing procedure with a subsequent compaction step via one or multiple calender rolls in order to press the powder mixtures to the current collector. By utilizing calender rolls a constant layer height and constant particle size distribute can be ensured. The mixtures and the current collector can be pressed via one or multiple subsequent calender rolls or calender roll assemblies.

Based on the manufacturing procedure, a subsequent drying step may be required. According to an embodiment, the drying process is performed after applying the first layer and the second layer. Alternatively, a first drying process is performed after applying the first layer and a second drying process is performed after applying the second layer. By performing the drying process after applying the first layer and the second layer an accelerated manufacturing process may be provided. A multi-step drying process enables more consistent and controlled manufacturing conditions.

The present disclosure will be explained in more detail below on the basis of schematic embodiments shown in the accompanying drawings:
- Fig. 1: shows a sectional view of an electrode according to an embodiment of the invention,
- Fig. 2: shows a flow chart illustrating methods for manufacturing the electrode shown in Fig. 1, and
- Fig. 3: shows cross sections of different electrodes.

In the figures, identical reference numbers identify similar elements. The sizes and relative positions of elements in the figures are not necessarily drawn to scale and some of these elements are enlarged and positioned to improve figure legibility. Further, the particular shapes of the elements as drawn are not intended to convey any information regarding the actual shape of the particular elements, and have been solely selected for ease of recognition in the figures.

Unless the context requires otherwise, throughout the present specification and claims, the word "comprise" and variations thereof, such as, "comprises" and "comprising" are to be construed in an open, inclusive sense, that is, as "including, but not limited to". In the present description, any concentration range, percentage range, ratio range, or integer range is to be understood to include the value of any integer within the recited range and, when appropriate, fractions thereof (such as one tenth and one hundredth of an integer), unless otherwise indicated. As used herein, the terms "about" and "approximately" mean ± 20%, ± 10%, ± 5% or ± 1% of the indicated range, value, or structure, unless otherwise indicated. It should be understood that the terms "a" and "an" as used herein refer to "one or more" of the enumerated components. The use of the alternative (e.g., "or") should be understood to mean either one, both, or any combination thereof of the alternatives.

Reference throughout this specification to "one embodiment" or "an embodiment" means that a particular feature, structure or characteristic described in connection with the embodiment is included in at least one embodiment of the present disclosure. Thus, the appearances of the phrases "in one embodiment" or "in an embodiment" in various places throughout this specification are not necessarily all referring to the same embodiment. Furthermore, the particular features, structures, or characteristics may be combined in any suitable manner in one or more embodiments.

Unless defined otherwise, all technical and scientific terms used herein have the same meaning as is commonly understood by one of skill in the art to which this disclosure belongs. As used in the specification and claims, the singular form "a", "an" and "the" include plural references unless the context clearly dictates otherwise.

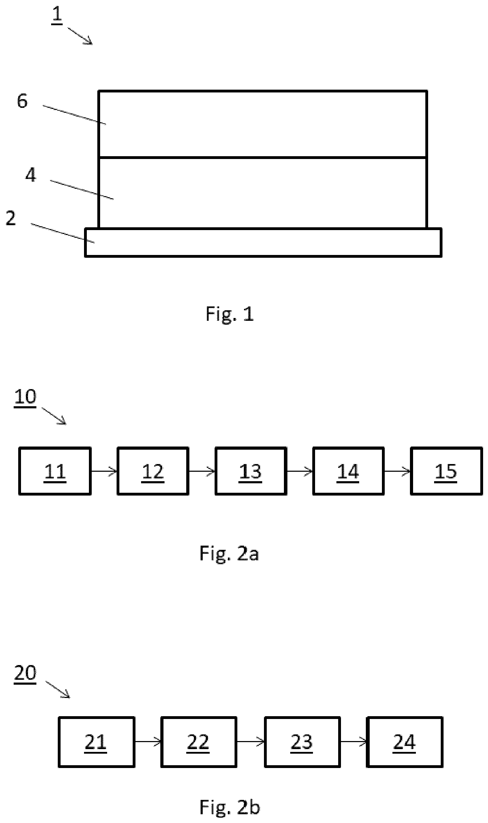

In Fig. 1 a sectional view of an electrode 1 according to an embodiment of the invention is illustrated. The electrode 1 is formed as a cathode electrode for a not shown electrochemical storage device e.g. lithium ion battery cell. The electrode 1 comprises at least one current collector 2, a first coating layer 4 and a second coating layer 6.

In the shown example, the current collector 2 is formed as a copper foil. The current collector 2 may be formed as an endless foil or as foil segments with predefined length and width.

The first coating layer 4 is formed from a first silicon-carbon composite material and the second coating layer 6 is formed from a second silicon-carbon composite material.

The plurality of first particles is formed as a porous carbon scaffold with micropores and mesopores. Especially, the silicon is incorporated in the micropores and mesopores of the carbon scaffold. Accordingly, the plurality of second particles is formed as a porous carbon scaffold with micropores and mesopores with silicon which is incorporated in the micropores and mesopores of the carbon scaffold of the second particles.

The first silicon-carbon composite material and the second silicon-carbon composite material are interconnected with the current collector 2. The first coating layer 4 is applied directly or indirectly with the help of a primer to the current collector 2. The second coating layer 6 is provided on top of the first coating layer 4.

According to the shown embodiment, the particle size of the first particles is bigger than a particle size of the second particles. For example the average particle size of the second particles within the second layer 6 may be smaller than 6 µm and the average particle size of the first particles within the first layer 4 may be larger than 8 µm.

The term carbon portion of the silicon-carbon composite materials refers to a material or substance consisting of carbon or at least comprising carbon. In this regard, a carbon material may comprise high purity, amorphous and crystalline materials. A carbon material may be an activated carbon, a pyrolyzed dried polymer gel, a pyrolyzed polymer cryogel, a pyrolyzed polymer xerogel, a pyrolyzed polymer aerogel, an activated dried polymer gel, an activated polymer cryogel, an activated polymer xerogel, an activated polymer aerogel, or a combination thereof. In a further embodiment, a carbon is producible by a pyrolysis of coconut shells or other organic waste. In this regard, a polymer is a molecule comprising two or more repeating structural units. A porous carbon, also known as a porous carbon material, offers the advantage that it is usually easy to produce, usually has low impurities and a large pore volume. As a result, a porous carbon exhibits good electrical conductivity and high mechanical and chemical stability. In one embodiment, the carbon material has a high micropore volume ratio. Typically, the porous carbon has a pore space, also referred to as a pore volume, wherein the pore space is a group of voids (pores) in the carbon that is fillable with a gas or fluid. In this regard, properties of porous carbon, and manufacturing methods are described in the prior art, for example US Publication No. 2017 / 0015559, the full disclosure of which is hereby incorporated by reference in its entirety for all purposes.

The Si portion of the silicon-carbon composite materials may be a pure silicon or a material composition comprising silicon. For example, the Si portion may be at least one alloy. An alloy may be a silicon-titanium alloy (Si-Ti), a silicon iron alloy (Si-Fe), a silicon nickel alloy (Si-Ni). In a further embodiment, the Si portion may consist of P-dopants, As-dopants or N-dopants. A P-dopant is usually a phosphorus dopant, an As-dopant is usually an arsenic dopant and an N-dopant is usually a nitrogen dopant.

The surface area for the silicon-carbon composite materials is determined e.g. by a Thermogravimetric analysis to determine its silicon content. Silicon-carbon composite materials may also be tested in half-cell coin cells. The anode for the half-cell coin cell can comprise 60-90% silicon-carbon composite, 5-20% Na-CMC (as binder) and 5-20% Super C45 (as conductivity enhancer), and the electrolyte can for example comprise 2:1 ethylene carbonate:diethylene carbonate, 1 M LiPF6 and 10% fluoroethylene carbonate. The half-cell coin cells can be cycled at 25 °C at a rate of C/5 for 5 cycles and then cycled thereafter at C/10 rate. The voltage can be cycled between 0 V and 0.8 V, alternatively, the voltage can be cycled between 0 V and 1.5 V. From the half-cell coin cell data, the maximum capacity can be measured, as well as the average Coulombic efficiency (CE) over the range of cycles from cycle 7 to cycle 20.

Fig. 2a and Fig. 2b are showing flow charts for illustrating two exemplary methods for manufacturing the electrode 1 shown in Fig. 1. Especially Fig. 2a shows a method 10 according to a first embodiment which utilizes curtain coating in order to apply the first layer 4 and the second layer 6 to the current collector 2.

In a first step 11 a first silicon-carbon composite mixture combined with a binder solution and comprising graphite particles and/or carbon black particles and/or carbon nanotubes is provided.

Furthermore, as a second or parallel step 12 to the first step 11, a second silicon-carbon composite mixture combined with a binder solution and comprising graphite particles and/or carbon black particles is provided.

Thus the first silicon-carbon composite mixture and the second silicon-carbon composite mixture each are provided in form of a mixture paste which can be applied via curtain coating to the current collector 2.

As a binder a styrene-butadiene gum/carboxymethylcellulose (CMC/SBR) blend, a polyacrylic acid (PAA) and/or a lithium polyacrylic (LiPAA) or a sodium polyacrylic (NaPAA) may be utilized. In an alternative embodiment, the binder is formed as a fluoropolymer such as a polytetrafluoroethylene (PTFE), a perfluoroalkoxy polymer resin (PFA), a fluorinated ethylene propylene (FEP), a polyethylene tetrafluoroethylene (ETFE), a polyvinyl fluoride (PVF), a polyethylene chlorotrifluoroethylene (ECTFE), a (polyvinylidene fluoride (PCDF), a (polychlorotrifluoroethylene (PCTFE), a trifluoroethanol, or combinations of at least one of these materials with at least one other material. In a further embodiment, a binder is a polyimide or a copolymer of polyacrylic acid and styrene-butadiene.

Then, in step 13, the first silicon-carbon composite mixture combined with the binder solution is applied as a first layer 4 to at least one current collector 2 which is formed as an electrically conductive foil.

In a further step 14 the second silicon-carbon composite mixture combined with a binder solution is applied as a second layer 6 on top of the first layer 4.

Finally a drying process with temperatures of 100°C to 140°C is performed in order to form the electrode 1.

Fig. 2b shows a method 20 according to a second embodiment which utilizes calendering in order to apply the first layer 4 and the second layer 6 to the current collector 2. The method 20 in accordance to the second embodiment also is utilized to form an electrode 1.

In a first step 21 a first dry silicon-carbon composite mixture combined with a binder powder and comprising graphite particles and/or carbon black particles is provided. In contrast to the method 10 according to the first embodiment, the binder is utilized in form of a powder and not of a solution.

In a further step 22 a second dry silicon-carbon composite mixture combined with a binder powder and comprising graphite particles and/or carbon black particles is provided.

Next 23, the first silicon-carbon composite mixture combined with the binder powder is applied via calendering as a first layer 4 to at least one current collector 2 which is formed as an electrically conductive foil. In another step 24, the second silicon-carbon composite mixture combined with the binder powder is applied via calendering as a second layer 6 on top of the first layer 4.

The method 20 manufacturing enables a dry or semi-dry manufacturing procedure with a subsequent compaction step via one or multiple calender rolls in order to press the powder mixtures to the current collector 2.

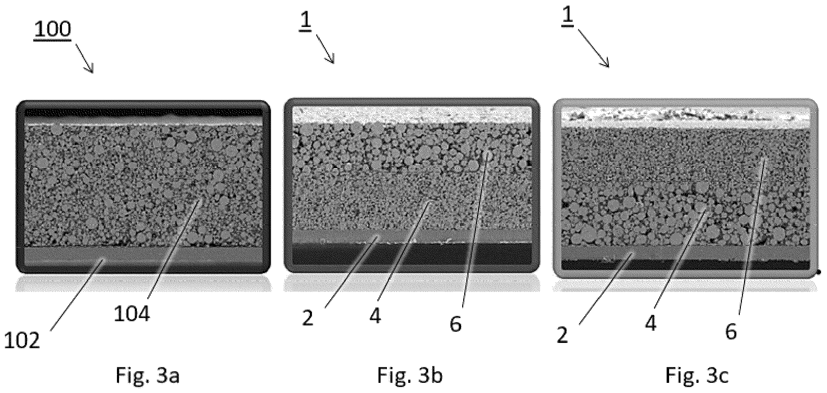

In Fig. 3a, Fig. 3b and Fig. 3c cross sections of different electrodes are shown. Furthermore, the cross sections are exemplary visualizing the individual first particles and second particles within the layers. The individual layers are accentuated for illustration purposes. Especially, Fig. 3a shows a comparative example of an electrode 100 with a multimodal silicon carbon material 104 applied to a current collector 102. The silicon carbon material 104 may comprise particles of different average sizes which are mixed in order to enable a denser package of the particles.

Fig. 3c illustrates a cross section of the electrode 1 in accordance with an embodiment shown in Fig. 1. Thus, the second particles in the second layer 6 or second coating layer 6 comprise an average size which is smaller than an average size of the first particles provided in the first layer 4 or first coating layer 4. The second layer 6 which is first exposed to the electrolyte has got a higher surface area which enables accelerated kinetics of the lithium ions of the electrolyte. An energy storage device with the said electrode 1 is able to charge a first part of its capacity within a shorter period of time.

In Fig. 3b a further embodiment of the electrode 1 is shown. Contrary to the embodiment shown in Fig. 3c or Fig. 1, the first particles in the first layer 4 comprise a smaller average size than the second particles in the second layer 6. Thus, the second particles in the second layer 6 are forming a barrier with decreased kinetics of the lithium ions. By reducing the kinetics of the lithium ions during charging and discharging of the appropriate electrochemical device, the long term stability and durability of the said electrochemical device may be improved due to less thermal stress.

## Claims

1. Electrode (1) for an electrochemical storage device, comprising:
- at least one current collector (2),
- a first silicon-carbon composite material, comprising a plurality of first particles,
- a second silicon-carbon composite material, comprising a plurality of second particles,
wherein the first silicon-carbon composite material and the second silicon-carbon composite material are interconnected with the current collector (2), **characterized in that** the first silicon-carbon composite material is formed as a first coating layer (4) of the current collector (2) and the second silicon-carbon composite material is formed as second coating layer (6) of the current collector (2).

2. Electrode according to claim 1, wherein a particle size of the first particles is bigger than a particle size of the second particles.

3. Electrode according to claim 1, wherein a particle size of the second particles is bigger than a particle size of the first particles.

4. Electrode according to anyone of the claims 1 to 3, wherein the plurality of first particles is formed as a porous carbon scaffold with micropores and mesopores, wherein silicon is incorporated in the micropores and mesopores of the carbon scaffold.

5. Electrode according to anyone of the claims 1 to 4, wherein the plurality of second particles is formed as a porous carbon scaffold with micropores and mesopores, wherein silicon is incorporated in the micropores and mesopores of the carbon scaffold.

6. Electrode according to any of the claims 1 to 5, wherein the plurality of first particles is formed as graphite with a surface, wherein silicon is deposited as Si particle or Si wires on the surface of the graphite.

7. Electrode according to any of the claims 1 to 6, wherein the plurality of second particles is formed as a graphite with a surface, wherein silicon is deposited as Si particle or Si wire on the surface of the graphite.

8. Electrode according to anyone of the claims 1 to 7, wherein the second silicon-carbon composite material is interconnected with the current collector via the first silicon-carbon composite material.

9. Electrode according to anyone of the claims 1 to 8, wherein the plurality of first particles of the first silicon-carbon composite material comprises a particle size distribution with Dv50 of > 8 µm.

10. Electrode according to anyone of the claims 1 to 9, wherein the plurality of second particles of the second silicon-carbon composite material comprises a particle size distribution with Dv50 of < 6 µm.

11. Electrode according to anyone of the claims 1 to 10, wherein the first silicon-carbon composite material comprises a first BET surface which is smaller than a second BET surface of the second silicon-carbon composite material.

12. Electrode according to anyone of the claims 1 to 11, wherein the first silicon-carbon composite material comprises a plurality of first particles with a Si/C content between zero and 70%, including zero and 70%.

13. Electrode according to anyone of the claims 1 to 6, wherein the second silicon-carbon composite material comprises a plurality of second particles with a Si/C content between 50% and 100%, including 50% and 100%.

14. Electrode according to anyone of the claims 1 to 13, wherein beside the first silicon-carbon composite material the first layer (4) comprises graphite particles and/or carbon black particles and/or carbon nanotubes, wherein beside the second silicon-carbon composite material the second layer (6) comprises graphite particles and/or carbon black particles.

15. Electrode according to anyone of the claims 1 to 14, wherein the current collector (2) is formed as a metal foil or as a metal alloy foil, in particular the current collector is formed from copper or comprises copper.

16. Method (10) for manufacturing an electrode, especially an electrode (1) according to anyone of the claims 1 to 15, wherein
- a first silicon-carbon composite mixture combined with a binder solution and comprising graphite particles and/or carbon black particles and/or carbon nanotubes is provided,
- a second silicon-carbon composite mixture combined with a binder solution and comprising graphite particles and/or carbon black particles is provided,
- the first silicon-carbon composite mixture combined with a binder solution is applied as a first layer (4) to at least one current collector (2) which is formed as an electrically conductive foil,
- the second silicon-carbon composite mixture combined with a binder solution is applied as a second layer (6) on top of the first layer (4),
- the electrode (1) is formed after performing a drying process with temperatures of 100°C to 140°C.

17. Method according to claim 16, wherein the first silicon-carbon composite mixture combined with a binder solution and/or the second silicon-carbon composite mixture combined with a binder solution are applied by curtain coating to the current collector.

18. Method according to claim 16 or 17, wherein the drying process is performed after applying the first layer (4) and the second layer (6),
or a first drying process is performed after applying the first layer (4) and a second drying process is performed after applying the second layer (6).

19. Method according to anyone of the claims 16 to 18, wherein first silicon-carbon composite mixture combined with a binder solution is provided with carbon nanotubes.

20. Electrochemical storage device, in particular formed as a lithium-ion battery, comprising at least one electrode (1) according to anyone of the claims 1 to 15 which is formed as a anode electrode, further comprising at least one cathode electrode and at least one separator arranged between the anode electrode and the cathode electrode, and comprising an electrolyte with lithium ions.

21. Method (20) for manufacturing an electrode (1) according to anyone of the claims 1 to 15, wherein
- a first dry silicon-carbon composite mixture combined with a binder powder and comprising graphite particles and/or carbon black particles is provided,
- a second dry silicon-carbon composite mixture combined with a binder powder and comprising graphite particles and/or carbon black particles is provided,
- the first silicon-carbon composite mixture combined with a binder powder is applied via calendering as a first layer (4) to at least one current collector (2) which is formed as an electrically conductive foil and the second silicon-carbon composite mixture combined with the binder powder is applied via calendering as a second layer (6) on top of the first layer (4).
